(19) **Europäisches Patentamt / European Patent Office / Office européen des brevets**

(11) **EP 3 421 219 B1**

(12) **EUROPEAN PATENT SPECIFICATION**

(45) Date of publication and mention
of the grant of the patent:
**01.02.2023 Bulletin 2023/05**

(21) Application number: **18180945.0**

(22) Date of filing: **29.06.2018**

(51) International Patent Classification (IPC):
**B29C 45/76** (2006.01)

(52) Cooperative Patent Classification (CPC):
**B29C 45/766; B29C 45/7693**

(54) **METHOD AND APPARATUS FOR MOLDING AN OBJECT ACCORDING TO A COMPUTATIONAL MODEL**

VERFAHREN UND VORRICHTUNG ZUM FORMEN EINES OBJEKTS NACH EINEM RECHENMODELL

PROCÉDÉ ET APPAREIL DE MOULAGE D'UN OBJET SELON UN MODÈLE DE CALCUL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2017 US 201762526559 P**

(43) Date of publication of application:
**02.01.2019 Bulletin 2019/01**

(73) Proprietor: **iMFLUX Inc.**
**Hamilton, OH 45015 (US)**

(72) Inventors:
• **Gergov, Milko Georgiev**
**Ann Arbor, MI 48108 (US)**
• **Huang, Chow-Chi**
**West Chester, OH 45069 (US)**

(74) Representative: **Hoyng Rokh Monegier B.V.**
**Rembrandt Tower, 30th Floor**
**Amstelplein 1**
**1096 HA Amsterdam (NL)**

(56) References cited:
US-A1- 2004 047 935    US-A1- 2013 255 371
US-A1- 2014 200 710    US-A1- 2017 015 040

• MICHAELI W ET AL: "GEZIELTE SPRITZGIESS-MACHINENEINSTELLUNG DURCH SIMULATIONSERGEBNISSE, TEIL 1. ÖSELECTIVE INJECTION MOULDING MACHINE SETTING USING SIMULATION RESULTS. PART 1", PLASTVERARBEITER, HUETHIG GMBH, HEIDELBERG, DE, vol. 45, no. 8, 1 August 1994 (1994-08-01) , pages 30-32,34, XP000486423, ISSN: 0032-1338

• CHEN S C ET AL: "SIMULATION OF INJECTION-COMPRESSION-MOLDING PROCESS. II. INFLUENCE OF PROCESS CHARACTERISTICS ON PART SHRINKAGE", JOURNAL OF APPLIED POLYMER SCIENCE, JOHN WILEY & SONS, INC, US, vol. 75, no. 13, 28 March 2000 (2000-03-28), pages 1640-1654, XP000888105, ISSN: 0021-8995, DOI: 10.1002/(SICI)1097-4628(20000328)75:13<1640::AID-APP10>3.0.CO;2-L

• SHETH H R ET AL: "AN ADAPTIVE CONTROL METHODOLOGY FOR THE INJECTION MOLDING PROCESS. PART 1: MATERIAL DATA GENERATION", JOURNAL OF INJECTION MOLDING TECHNOLOGY, SOCIETY OF PLASTICS ENGINEERS, BROOKFIELD, CT, US, vol. 2, no. 2, 1 June 1998 (1998-06-01), pages 86-94, XP000767323, ISSN: 1533-905X

• Jian Wang: "PVT Properties of Polymers for Injection Molding" In: "Some Critical Issues for Injection Molding", 23 March 2012 (2012-03-23), InTech, XP055330113, ISBN: 978-953-51-0297-7 DOI: 10.5772/35212,

EP 3 421 219 B1

## Description

### Field of Invention

This disclosure relates to the field of injection molding and computer modeling of fluid flow in a cavity. More particularly, this disclosure relates to molding an object according to the computer modeling of an injection molding process.

### Background

Injection molding of parts includes injecting material into a mold, packing and cooling of the material in the mold to form the desired part, and ejecting the finished part from the mold. Parameters such as the flow rate, temperature, and pressure will affect the time it takes to fill the mold during the injection phase, and the time it takes to cool the material. Table data has been used to optimize the fill time.

Computer aided engineering simulation can be used advantageously to provide design and manufacturing engineers with visual and numerical feedback as to what is likely to happen inside the mold cavity during the injection molding process, allowing them to better understand and predict the behavior of contemplated component designs so that the traditional, costly trial and error approach to manufacturing can be eliminated substantially.

In one embodiment, as defined in claim 1, a method of modelling and then physically forming an object includes building a computer model of a mold for the object. The step of building the computer model of the mold includes inputting parameters related to the object and

US 2017/0015040 A1 recites a method for operating a molding machine that includes specifying a simulating domain corresponding to a genuine domain in a mold disposed on the molding machine. The method proceeds to perform a virtual molding by using a setting packing pressure profile to generate a simulated state waveform, generating a designed state waveform including an isobaric phase and an isochoric phase while taking into consideration the simulated state waveform.

US 2013/0255371 A1 recites a material characterization system and method for quantifying the characteristics of a flowing thermoplastic material. The system comprises a tool comprising first and second tool halves, a plurality of flowing material characterization channels, and a feed runner. The tool is at a temperature that causes phase changes from fluid to solid in at least a portion of the characterized material and enables solidification of the material in the flowing material characterization channels.

US 2004/0047935 A1 recites a system for generating a simulation of fluid flow in an injection molding process carried out by an injection molding machine having an injection unit for injecting the fluid into a manifold delivering the fluid to at least two injection ports leading to one or more cavities of one or more molds. The system comprises one or more programs containing a set of instructions that generate a calculated property, state, position or image of the fluid flowing into or through each cavity, the one or more programs using one or more variable inputs that are representative of one or more selected properties, characteristics or operating parameters of the machine or the fluid.

### SUMMARY

While the invention is laid out in the independent claims, further aspects of the invention a set forth in the dependent claims, the drawings and the following description. the mold. The method also includes identifying sensor locations in the computer model of the mold that correspond to locations where physical sensors would be located in a physical mold, and placing virtual sensors in the computer model at the sensor locations. The method further includes inputting parameters related to an injection material and an injection machine and creating a simulated injection by simulating flow of the injection material into the computer model of the mold. The method also includes determining a desired flow rate profile of the injection material during the simulated injection and creating pressure, volume, and temperature curves for the desired flow rate profile of the injection material at the sensor locations. The method additionally includes providing a physical mold corresponding to the computer model of the mold, where the physical mold has physical sensors at the sensor locations. The method further includes injecting the injection material into the physical mold at a physical flow rate corresponding to the desired flow rate profile, monitoring pressure, volume, and temperature of the injection material by the physical sensors, and controlling the physical flow rate when the monitored pressure, volume, or temperature of the injection material deviates from the pressure, volume, and temperature curves. monitored pressure, volume, or temperature of the injection material deviates from the pressure, volume, and temperature curves.

In another embodiment, a system is defined, see claim 7.

## Brief Description of the Drawings

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.

Figure 1 is a perspective view of an exemplary injection molding device;
Figure 2 is a schematic drawing showing the inputs and outputs of a modeling and molding system;
Figure 3 is graph illustrating changes to molding parameters over time during an injection molding process;
Figure 4 is a flowchart illustrating certain process steps performed by a modeling system; and
Figure 5 is a flowchart illustrating certain steps of an injection molding process.

## Detailed Description

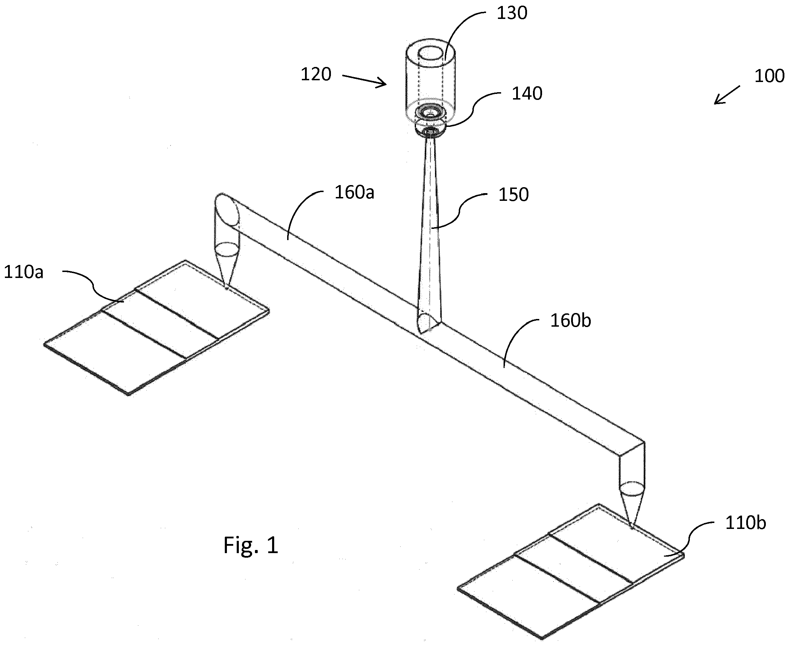

Figure 1 is a simplified drawing illustrating an exemplary injection molding device 100. This figure is offered as an example of geometries in an injection molding device that affect the flow rate and other parameters of an injection molding process. It should be understood that any injection molding device may be employed with the disclosed system, including simpler or more complex devices.

In the illustrated embodiment, the injection molding device 100 is configured to fill a first mold 110a and a second mold 110b simultaneously. The injection molding device 100 includes a gate 120 having a large diameter portion 130 and a reduced diameter portion 140 that leads to a main passageway 150. The main passageway terminates at a first arm 160a and second arm 160b, each of which is orthogonal to the main passageway 150. The first arm 160a leads to a first exit nozzle 170a that is orthogonal to the first arm 160a and terminates at the first mold 110a. The second arm 160b leads to a second exit nozzle 170b that is orthogonal to the second arm 160b and terminates at the second mold 110b.

Injection material is forced through the injection molding device 100 using a press, reciprocating screw, or other driving mechanism (not shown). The injection material may be a thermoplastic material such as ABS, polypropylene, polyoxmethylene, polycarbonate, PVC, nylon, acrylic, styrene, polyether imide, or blends of the aforementioned material. It should be understood that these materials are merely exemplary and any injection material may be employed. The injection material may be provided in the form of thermoplastic pellets that are placed in a hopper (not shown). The thermoplastic pellets are then melted and forced through the gate 120 by the driving mechanism.

Sensors are employed at various locations on the injection molding device 100 or molds 110 to measure temperature and pressure inside the device. Sensors are also employed to measure the velocity of the injection material as it flows through the injection molding device 100 or molds 110. In one embodiment, sensors are located at the exit nozzles 170 and at the fill ends of the molds 110. However, sensors may be employed at any location. Additionally, the position and velocity of the driving mechanism is also measured by an encoder or other measuring device. The fill time and cooling time are also measured during the injection molding process.

Prior systems have attempted to optimize filling time and cooling time by relying on table data that relates a given measurement to adjustments in the speed of the driving mechanism or to other adjustments. In the presently disclosed system, real data is acquired from real time measurements and additional parameters are mathematically calculated. The real time measurements and calculated parameters are used to adjust the speed of the driving mechanism on the fly.

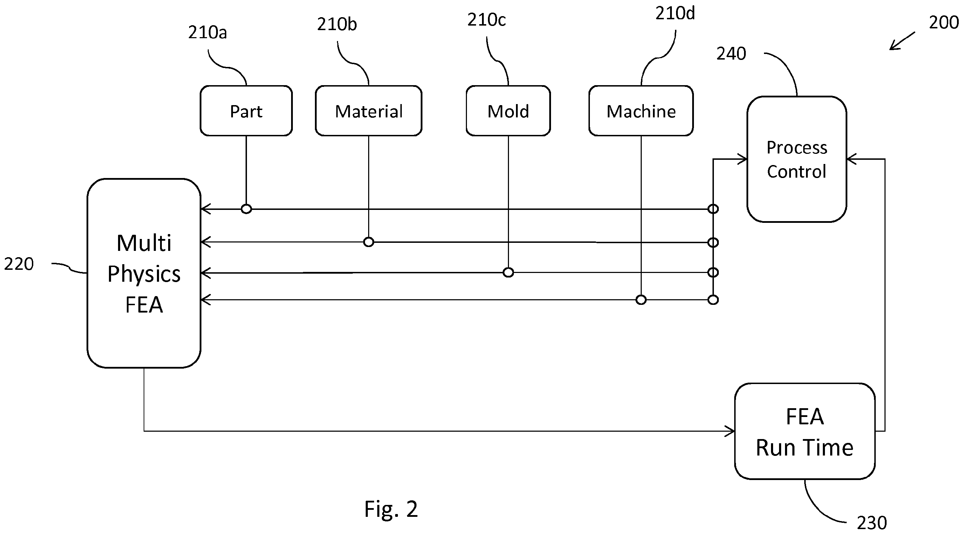

Figure 2 is a schematic drawing showing the inputs and outputs of a modeling and molding system 200. In one embodiment, computerized models of the injection molding device 100 and molds 110 are built, and computerized simulations of the injection molding process are run to find optimal results in various conditions. The computerized simulations may also be used iteratively to adjust the initial parameters to further optimize the injection molding process. For example, a designer may select a different material composition for the injection material, change the initial temperature, change the geometry or material of the injection mold device, change the geometry or material of the molds, or change other parameters.

Sensor locations are identified during the building of the solid model. The sensor locations correspond to locations where physical sensors would be located in a physical mold. A single sensor location may be identified, or two or more sensor locations may be identified. In one embodiment, at least two sensor locations are identified, including a first location at a nozzle and a second location at an end of a fill location. However, it should be understood that any number of sensor locations may be employed.

After the sensor locations are identified, virtual sensors are placed in the solid model at the sensor locations. The virtual sensors are nodal points at which information is gathered during simulations.

With the resultant finite element model or other discretized solution domain defined, a user specifies boundary conditions for the analysis. The boundary conditions are parameters related to the object being molded, the material being used in the molding process, the mold itself, or the machine providing the material. More specifically, in an injection mold, the boundary conditions are parameters related to the part, the injection material, the injection mold, or the injection machine.

As can be seen in **Figure 2,** a plurality of parameters **210** are input into a multi-physics FEA processor **220.** The parameters **210** include part parameters **210a,** material parameters **210b,** mold parameters **210c,** and machine parameters **210d.**

Part parameters **210a** include the estimated weight of the part, the heat transfer area of the part, nominal wall thickness, other part geometries, surface finish, and the minimum and maximum wall thickness of the part. Part parameters **210a** may also include the final temperature at which the part is removed from the mold **110.** The final temperature may be selected by the operator, or otherwise determined as the temperature at which the part maintains its shape.

Material parameters **210b** include mass density, molar heat capacity, fluid composition, and thermal conductivity. The injection material may be a blend of multiple materials, each having different material properties. Each constituent material has a known mass density, molar heat capacity, and thermal conductivity. The material property of the resulting material may be determined from these constituent values and the weight percentage of the constituent materials.

Material parameters **210b** may include table data stored in a database. Exemplary table data includes the data shown in Table 1 below. This data is merely exemplary, and is presented to illustrate the type of data that may be stored for various materials. As can be seen below, the material properties are shown for a given temperature or pressure, but those properties may change as the temperature and pressure changes. Thus, the table data may include data for a range of temperatures and pressures. Material characterization at the right places at the right time usable for monitoring and control in real time.

**Table 1**

| Material | Specific Gravity at 73 °F | Water Absorp (%) at 73 °F | Tensile Strength (PSI) at 73 °F | Tensile Elongation (%) at 73 °F | Coeff. of Linear Thermal Expansion (in/in/°F $\times$ 10$^{-5}$) at 73 °F | Heat Deflection Temperature (°F) at 66/264 psi | |
|---|---|---|---|---|---|---|---|
| ABS | 1.04 | 0.30 | 4,100 | 32 | 5.6 | 200 | 177 |
| Acrylic | 1.19 | 0.20 | 10,000 | 4.5 | 4.0 | - | 195 |
| Nylon | 1.14 | 1.20 | 12,400 | 90 | 4.5 | - | 194 |
| Poly-carbonate | 1.20 | 0.15 | 9,500 | 135 | 3.8 | 280 | 270 |
| Poly-propylene | 0.91 | slight | 5,400 | - | - | 210 | - |
| PVC | 1.42 | 0.06 | 7,500 | - | 3.2 | - | 158 |

Mold parameters **210c** include mold temperature, cavity dimensions, cavity configuration, mold parting plane, the mold volume, the construction of the mold (e.g., the materials used to construct the mold, or the material properties of the mold), or heating or cooling assumptions related to the mold. Additional part parameters include any heating or cooling elements that aid in heat transfer.

Machine parameters **210d** include the applied temperature, fluid injection location, fluid injection temperature, fluid injection pressure, fluid injection volumetric flow rate, and melt pressure. The operator may vary the temperature or vary the position or velocity of the driving mechanism to adjust the flow rate. The temperature may be measured both within the injection molding device **100** and within the mold **110.**

Machine parameters **210d** also include the geometry of the machine. As the injection material is forced through the injection molding device **100,** the geometry of the injection molding device affects the flow rate of the injection material. For example, in the **Figure 1** embodiment the injection material experiences a shear force as it passes from the large diameter portion **130** to the reduced diameter portion **140** of the gate **120.** This shear force affects the flow rate of the injection material. The initial impact of the injection material at the reduced diameter portion of the gate **120** may also cause a spike in pressure in the cavity, which may alter the viscosity of the injection material and further affecting the flow rate.

As the injection material passes through the main passageway **150,** the arms **160,** and the exit nozzles **170,** the injection material experiences additional shears and changes in pressure, further affecting the flow rate of the injection material. Likewise, as the injection material experiences further shears and changes in pressure as it flows through the molds **110.**

The injection material may also experience a change in temperature as it flows through the injection molding device **100** and the molds **110.** The material may cool as it travels away from the heat source. However, friction may heat the material as it travels along its path. Such changes in temperature may affect the viscosity of the material and further affect the flow rate. These changes may be negligible, however. The change in temperatures may be mitigated or accelerated based on the heat conductivity of the materials selected for the injection molding device **100** and the molds **110,** or with the use of heating or cooling elements along the pathway of the injection material.

The multi-physics FEA processor calculates additional parameters based on the part parameters **210a,** material parameters **210b,** mold parameters **210c,** and machine parameters **210d.** For example, the heat deflection temperature or heat distortion temperature (i.e., the temperature at which a polymer or plastic sample deforms under a specified load) may be determined from the material, machine, and mold parameters.

The multi-physics FEA also runs simulated injection molding processes and measures and calculates additional parameters during the simulations. The calculated parameters include, without limitation: the mass density of the injection material, the mass heat capacity of the injection material, the molar average heat capacity of the injection material, the molecular weight, the volume, the screw stroke, the relative viscosity, the absolute viscosity, the Reynold's number at a given location, the thermal conductivity of the injection material, the thermal diffusivity, the Prandtl at a given location, the relative shear, the relative shear rate, the melt flow index, the viscosity as a function of molecular weight, the viscosity as a function of shear, the mass as a function of shear rate, the determined stress as a function of position, the determined mass in the part as a function of position, the minimum and maximum polydispers in the part as a function of position, the theoretical cooling time, economics leading indicators, dynamic melt pressure, volumetric flow rate, bulk elastic modulus, flow velocity, Cauchy numbers, and density.

From these simulations, an optimal flow is determined by the multi-physics FEA processor **220,** and pressure, volume, and temperature curves are created for the virtual sensor locations. Likewise, curves representing other data may also be generated. The curves may reflect measured data, calculated data, or retrieved data. For example, a temperature curve may reflect the temperature measured by sensors or virtual sensors. A curve representing material properties may reflect a table entry for a given property for a given material at the measured temperature. A curve representing relative shear may be calculated from measure data or table data using solvers.

The curves may be generated and read at run time **230,** as the parameters are adjusted automatically on the fly. In another embodiment, the FEA calculations will be performed first, and the curves will be determined by reading the readings from the physical sensors and using the pre-calculated curves to determine what feed-forward profile to use for controlling the melt by pressure, screw velocity, or a combination profile to achieve the optimal plastic material flow.

The same parameters **210** are used in the process controls **240** of a molding system. As the molding system injects material into the cavity, the process controls **240** compare the pressure, volume, and temperature at sensor locations to the pressure, volume, and temperature curves. The pressure, volume, and temperature curves will be used in the actual molding operations to adjust the pressure, screw velocity, and temperature during the molding process so that the PVT readings of the physical sensors matches the PVT curves of the virtual sensors.

As one or more parameters change during the molding process, these changes affect other parameters. For example, an increase in temperature affects certain material properties, which in turn affects the volumetric flow rate of the material. Thus, during the molding process, the parameters are constantly monitored, measured, and recalculated. By measuring and calculating these parameters in real time, the system provides feedback to the controller, which may then adjust other parameters (such as screw velocity) to finely control the molding process. Thus, the system may be characterized as having self-controlling injection capabilities.

The controller may employ machine learning or deep learning capabilities to control the molding process. In such an embodiment, while algorithms and solvers may be employed to calculate certain parameters, the controller employs machine learning techniques to read the real time inputs and make appropriate adjustments to the system.

When the system is used to simulate an injection molding process, data is recorded at each of the sensor locations. Such data recordation may be referred to as data capture by the virtual sensors in the solid model. Specifically, the pressure, volume, and temperature are recorded at the sensor locations during the simulation, so that pressure, volume, and temperature curves can be created. The pressure, volume, and temperature curves can represent the change of pressure, volume, and temperature over time or the change of pressure, volume, and temperature per unit of displacement of the injection material.

Upon completion of the analysis, the analytical results may be output in a variety of manners. For example, the relevant variables may be displayed in a graphics format, overlaying the solid model for visual review by the user, or may be output electronically for further processing or analysis. If the results of the filling phase and the packing phase are deemed to be acceptable, the simulation terminates and the user can proceed to release the design to manufacturing. Because the specified boundary conditions included information related to the configuration of the injection mold and the process parameters, the design can be released for machining of the injection mold and the injection molding process operation sheets generated directly. The pressure, volume, and temperature curves can also be released to an operator, for use with the physical mold during the molding process.

If, however, the user determines that the results of the simulation are unacceptable or less than optimal, the user has the option of modifying one or more of the boundary conditions or discretization of the model solution domain and thereafter repeating simulation iteratively, until such time as the user is satisfied with the results. Examples of unacceptable results include analytical instability of the model or process failures such as short shots, wherein the mold cavity is incompletely filled, or generation of excessive temperatures, velocities, or pressures during filling which could degrade component polymer material properties or introduce excessive residual stresses in the components which would adversely affect production yields and could lead to premature component failure. By providing this highly accurate analytical simulation capability early in the design process, significant costs and delays downstream during initial production runs can be avoided.

Alternatively, the analytical results may be fed directly into the multi-physics FEA processor, without displaying the results to an operator. The multi-physics FEA processor may review the analytical results in real time, or it may review the results after each simulation. The multi-physics FEA processor may adjust parameters on the fly, in the same manner described above, based on the measured and calculated parameters. Thus, the system provides a self-controlling injection simulation. Or after a simulation, the multi-physics FEA processor may review the results and suggest changes for a subsequent simulation. In either embodiment, the multi-physics FEA process may employ deep learning or machine learning capabilities to control the simulation.

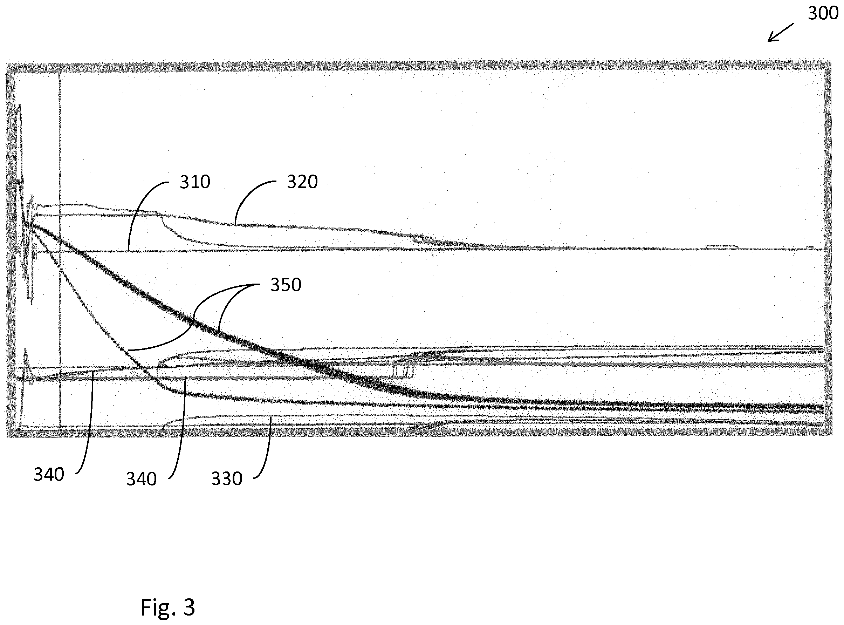

**Figure 3** is graph **300** illustrating changes to molding parameters over time during an injection molding process using the injection molding device **100.** Thus, many of the measured parameters experience large fluctuations at the beginning of the process, as the injection material passes from the large diameter portion **130** to the reduced diameter portion **140** of the gate **120,** and then through the main passageway **150,** the arms **160,** and the exit nozzles **170.** After the injection material begins to fill the molds **110** the measured parameters hold at a substantially constant rate, or change at a smoother rate. This particular graph **300** is an overlay of multiple runs of an injection molding process, in order to optimize the results. Changing one variable during the simulation will affect other variables. Thus, the overlays represent experimentation with different variables until the results are optimized.

The graph **300** may be generated in the context of a computer simulation of an injection molding process, or may be produced as a result of a physical injection molding process.

Line **310** represents the Internal Melt Pressure ("IMP") signal, which represents the pressure within the melt as result of mold resistance, partial solidification and air resistance during fill, pack and hold. This signal is computed from two real time measurements from physical sensors of melt pressure and temperature. The first sensor is located at the nozzle and the second sensor is located at the last place to fill in the cavity. The IMP signal is used as feedback for close loop control of injection. As can be seen in the simulation illustrated in **Figure 3,** the IMP signal **310** initially drops as the injection molding device **100** is filled by the injection material, and then returns to its original state and remains at substantially the same level during the filling of the molds **110.**

Line **320** represents the change in hydraulic injection pressure over time. The hydraulic injection pressure is the pressure generated by the driving mechanism. As can be seen in the simulation illustrated in **Figure 3,** the hydraulic injection pressure **320** initially spikes as the injection material passes from the large diameter portion **130** to the reduced diameter portion **140** of the gate **120.** The hydraulic injection pressure **320** then drops as the injection material begins to pass through the main passageway **150,** then increases again as the injection material passes through arms **160** and the exit nozzles **170.** The hydraulic injection pressure **320** then decreases as the molds **110** fill. As can be seen in this graph **300,** the hydraulic injection pressure **320** dropped at different rates during different simulations, based on changes to other parameters.

Line **330** represents the change in cavity pressure, (*i.e.*, the pressure inside of the molds **110)** over time. As can be seen in the simulation illustrated in **Figure 3,** the cavity pressure **330** is initially at zero while the injection molding device **100** is filled by the injection material, and the cavity remains empty. The cavity pressure **330** rises as the molds **110** begin to fill remains at substantially the same level during the filling of the molds **110.**

Line **340** represents the change in melt pressure over time. The melt pressure is the pressure within the melt as result of mold resistance, partial solidification and air resistance during fill, pack and hold stages of injection. As can be seen in the simulation illustrated in **Figure 3,** the melt pressure **340** initially spikes as the injection material passes from the large diameter portion **130** to the reduced diameter portion **140** of the gate **120.** The melt pressure **320** then drops and gradually increases again as the injection material passes through the injection molding device **100** and fills the molds **110.**

Line **350** shows the change in the position of the driving mechanism (*i.e.*, the screw position) over time. As can be seen in the simulation illustrated in **Figure 3,** the screw position **350** changes at a rapid pace initially, then changes at a slower pace until driving mechanism reached its end point. However, in some of the trials, the screw position **350** continued to change rapidly until the driving mechanism reached its end point. The results of these trials can be compared to determine the optimal screw velocity at various stages.

Line **360** shows the change in the cavity temperature over time. As can be seen in the simulation illustrated in **Figure 3,** the screw position **350** changes at a rapid pace initially, then changes at a slower pace until driving mechanism reached its end point. However, in some of the trials, the screw position **350** continued to change rapidly until the driving mechanism reached its end point. The results of these trials can be compared to determine the optimal screw velocity at various stages.

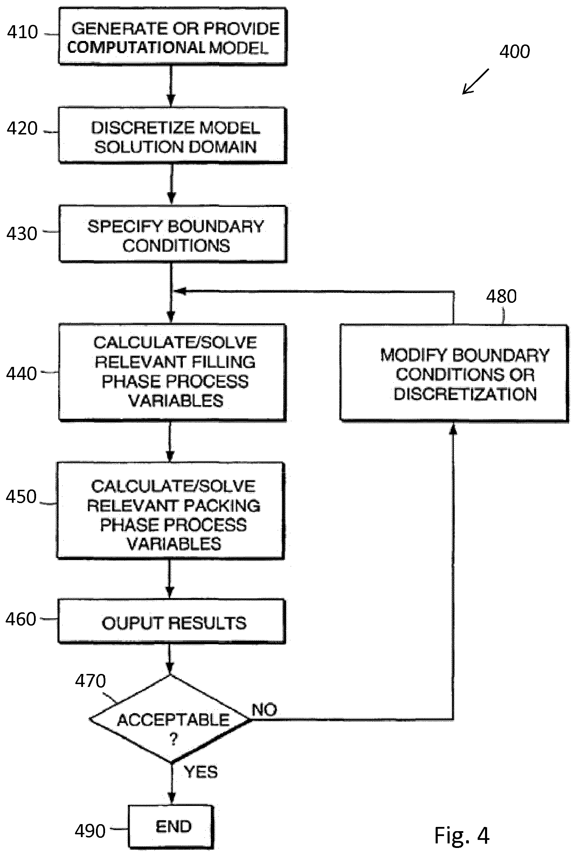

**Figure 4** is a schematic representation of one embodiment of a simplified, top level system flowchart **400** summarizing certain process steps of injection molding a part using the FEA run time data **230** and the process control **240.** As a first step **410,** a computational model of the injection molding device **100** and molds **110** are generated or provided, as discussed above. The model solution domain is then defined and discretized by any of a variety of methods, such as by finite element analysis in which a finite element model is produced by generating a finite element mesh based on the solid model in step **420.** The mesh consists of a plurality of contiguous solid elements defined by shared nodes.

With the resultant finite element model or other discretized solution domain defined, a user specifies boundary conditions in step **430** for the analysis. The boundary conditions include the parameters **210** as well as the calculated parameters discussed above.

Once the boundary conditions have been entered, the multi-physics FEA executes the instructions in accordance with the simulation model to first calculate or solve relevant filling phase process variables in step **440.** As discussed above, such variables can include fluidity, mold cavity fill time, pressure, shear rate, stress, velocity, viscosity, and temperature. Calculations are not limited to these variables; however these are basic variables that can be used to solve other variables included in calculations of such things as crystallization kinetics and fiber orientation distributions.

In this system, the multi-physics FEA is able to create melt characterization in real time using solvers. Notably, the system calculates volume as a function of time (V(t)) rather than simply measuring volume. The system characterizes melt from the beginning to the end of the process to examine the relationship between volume and flow. In one embodiment, the system employs volumetric solvers to calculate the volume filled in the cavity. Volumetric solvers require the solution of second order differential equations: $\iint_0^n f(x,y)d(x)$ . By using such volumetric solvers, one is able to identify when a stopping point is reached.

Further, filling can also be solved as a compressible fluid, in which case mass terms included in the packing phase calculations (e.g. density, mass, and volumetric shrinkage) can also be calculated in the filling phase. According to one embodiment, the simulation can be based on the assumption that the fluid is incompressible in the filling phase and compressible in the packing phase. According to another embodiment, it can be assumed that the fluid is compressible in both the filling and packing phases. However, it is not mandatory to solve for fluidity before pressure, velocity, and viscosity, nor is it necessary to solve for fluidity at all.

Once the simulation reaches the stage in the analysis where it is determined that the mold cavity has been filled, the computer executes the instructions in accordance with the simulation model to next calculate or solve relevant packing phase process variables for the nodes in step **450.** Such variables can include the mass properties of the component produced in accordance with the simulation model such as density and volumetric shrinkage, in addition to fluidity, packing time, pressure, shear rate, stress, velocity, viscosity, and temperature.

During the simulation, data is recorded at each of the sensor locations. Such data recordation may be referred to as data capture by the virtual sensors in the solid model. Specifically, the pressure, volume, and temperature are recorded at the sensor locations during the simulation, so that pressure, volume, and temperature curves can be created. The pressure, volume, and temperature curves can represent the change of pressure, volume, and temperature over time or the change of pressure, volume, and temperature per unit of displacement of the injection material.

Upon completion of the analysis, the analytical results may be output in step 460 in the form of graphs, such as the graph **300,** or in any variety of manners. For example, the relevant variables may be displayed in a graphics format, overlaying the solid model for visual review by the user, or may be output electronically for further processing or analysis.

If the user determines that the results of the simulation in step **470** are unacceptable or less than optimal, the user has the option in step **480** of modifying one or more of the boundary conditions or discretization of the model solution domain and thereafter repeating simulation steps **440** through **460** iteratively, until such time as the user is satisfied with the results. Examples of unacceptable results include analytical instability of the model or process failures such as short shots, wherein the mold cavity is incompletely filled, or generation of excessive temperatures, velocities, or pressures during filling which could degrade component polymer material properties or introduce excessive residual stresses in the components which would adversely affect production yields and could lead to premature component failure. By providing this analytical simulation capability early in the design process, significant costs and delays downstream during initial production runs can be avoided.

If the results of the filling phase and the packing phase are deemed to be acceptable in step **470,** the simulation terminates in step **490** and the user can proceed to release the design to manufacturing. Because the specified boundary conditions included information related to the configuration of the injection mold and the process parameters, the design can be released for machining of the injection mold and the injection molding process operation sheets generated directly. The pressure, volume, and temperature curves can also be released to an operator, for use with the physical mold during the molding process.

After the analytical results are deemed acceptable, and the design and pressure, volume, and temperature curves are released, a physical mold is built that has physical sensors at sensor locations corresponding to the sensor locations of the virtual sensors in the solid model. The physical sensors monitor the pressure, volume, and temperature at each sensor location. The physical mold also has a cavity and an injection nozzle configured to inject material into the cavity. The controller **240** is configured to control a flow rate of the injection of material into the cavity.

The controller **240** is configured to receive pressure, volume, and temperature information from the sensors. The controller **240** compares this received information to pressure, volume, and temperature curves. If the monitored pressure, volume, or temperature of the injection material deviates from the pressure, volume, and temperature curves by more than a predetermined amount, the controller **240** can adjust the flow rate of the injection material. For example, the controller **240** can adjust the physical flow rate by adjusting at least one of a pressure, a screw velocity, and a temperature. The controller **240** may also control material melt by pressure, screw velocity, or a combination profile. The controller **240** and injection molding device **100** thus act as a "self-driving" injection molding device.

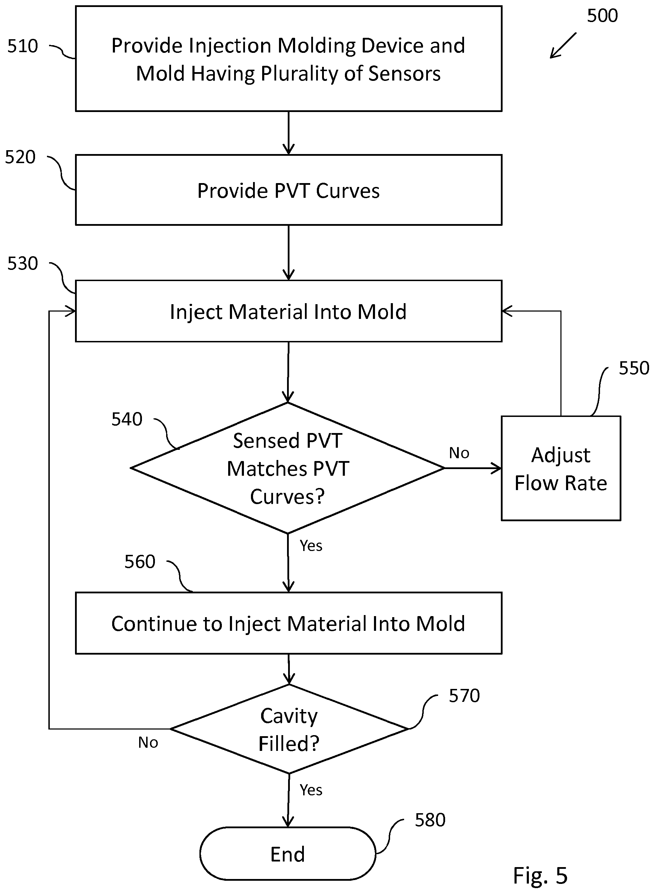

**Figure 5** is a flowchart illustrating a method **500** of molding an object using the pressure, volume, and temperature curves. At **510,** a physical injection molding device (such as the injection molding device **100**) and a physical mold (such as the molds **110**) are provided. The mold has a plurality of physical sensors at sensor locations.

At **520,** pressure, volume, and temperature curves are provided for a desired flow rate profile of an injection material at the sensor locations. At **530,** injection material is injected into the physical mold at a physical flow rate corresponding to the desired flow rate profile.

The physical sensors continuously monitor the pressure, volume, and temperature of the injection material. If the sensed pressure, volume and temperature does not match the pressure, volume temperature curves (at **540),** the physical flow rate is adjusted (at **550),** and material is continuously injected into the mold (at **530).** If the sensed pressure, volume and temperature does match the pressure, volume temperature curves (at **540),** material is continuously injected into the mold (at **560)** until the cavity is filled (at **570)** and the process ends (at **580).**

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Gamer, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the application, in its broader aspects, is not limited to the specific details, the representative apparatus and method, and illustrative examples shown and described. Accordingly, departures may be made from such details without departing from the scope of the invention as defined by the appended claims.

**Claims**

**1.** A method of modelling and then physically forming an object, the method comprising:

building a computer model of a mold for the object, wherein the step of building the computer model of the mold includes inputting parameters related to the object and the mold;
identifying sensor locations in the computer model of the mold that correspond to locations where physical sensors would be located in a physical mold;
placing virtual sensors in the computer model at the sensor locations;
inputting parameters related to an injection material and an injection machine;
creating a simulated injection by simulating flow of the injection material into the computer model of the mold;
determining a desired flow rate profile of the injection material during the simulated injection;
creating pressure, volume, and temperature curves for the desired flow rate profile of the injection material at the sensor locations;

providing a physical mold corresponding to the computer model of the mold, wherein the physical mold has physical sensors at the sensor locations;

injecting the injection material into the physical mold at a physical flow rate corresponding to the desired flow rate profile;

monitoring pressure, volume, and temperature of the injection material by the physical sensors;

controlling the physical flow rate when the monitored pressure, volume, or temperature of the injection material deviates from the pressure, volume, and temperature curves.

2. The method of claim 1, wherein the step of inputting parameters related to the object includes inputting at least one of a nominal wall thickness, an object geometry, and a surface finish,

wherein the step of inputting parameters related to the mold includes inputting at least one of a mold material and cooling assumptions,

wherein the step of inputting parameters related to the injection material includes inputting at least one of a material type and material properties, and/or

wherein the step of inputting parameters related to the injection machine includes inputting at least one of a pressure range and a temperature range.

3. The method of claim 1, wherein the step of identifying sensor locations includes identifying a first location at a nozzle and a second location at an end of a fill location.

4. The method of claim 1, wherein the step of creating pressure, volume, and temperature curves includes reading the pressure, volume, and temperature curves at run time and adjusting the pressure, volume, and temperature curves, and/or

wherein the step of creating pressure, volume, and temperature curves includes performing finite element analysis calculations, and creating pre-calculated curves, preferably further comprising reading information from the physical sensors and using the pre-calculated curves to determine a feed-forward profile for controlling melt by pressure, screw velocity, or a combination profile.

5. The method of claim 1, wherein the pressure, volume, and temperature curves are created by performing finite element analysis (FEA) calculations,

wherein the FEA calculations are preferably performed on an FEA model of a mold, wherein the FEA model of the mold preferably includes virtual sensors at locations corresponding to the sensor locations of the physical mold.

6. The method of claim 1, wherein the step of controlling the physical flow rate includes adjusting at least one of a pressure, a screw velocity, and a temperature.

7. A system comprising:

a cavity;

an injection nozzle configured to inject material into the cavity;

a plurality of sensors at sensor locations, wherein each of the plurality of sensors is configured to sense a pressure, volume, and temperature of the material at one of the sensor locations;

a controller configured to control a flow rate of the injection of material into the cavity, and

a processor configured to create the pressure, volume, and temperature curves through finite element analysis (FEA) calculations,

wherein the controller is configured to receive information from the plurality of sensors related to the pressure, volume, and temperature of the material and compare the received information to pressure, volume, and temperature curves, and

wherein the controller is configured to control the flow rate when the pressure, volume, or temperature of the injection material deviates from the pressure, volume, and temperature curves

wherein the processor is configured to perform the FEA calculations on an FEA model of a mold, wherein the FEA model of the mold includes virtual sensors at locations corresponding to the sensor locations.

8. The system of claim 7, wherein the controller is configured to control at least one of a pressure, a screw velocity, and a temperature, and/or

wherein the controller is configured to control material melt by pressure, screw velocity, or a combination profile.

**Patentansprüche**

1. Verfahren zum Modellieren und anschließenden physischen Ausbilden eines Objekts, das Verfahren umfassend:

Erstellen eines Computermodells einer Form für das Objekt, wobei der Schritt des Erstellens des Computermodells der Form ein Eingeben von Parametern einschließt, die sich auf das Objekt und die Form beziehen;
Identifizieren von Sensorstellen in dem Computermodell der Form, die Stellen entsprechen, an denen sich physische Sensoren in einer physischen Form befinden würden;
Platzieren virtueller Sensoren in dem Computermodell an den Sensorstellen;
Eingeben von Parametern, die sich auf ein Injektionsmaterial und eine Injektionsmaschine beziehen;
Erzeugen einer simulierten Injektion durch Simulieren eines Flusses des Injektionsmaterials in das Computermodell der Form;
Bestimmen eines gewünschten Flussratenprofils des Injektionsmaterials während der simulierten Injektion;
Erzeugen einer Druckkurve, einer Volumenkurve und einer Temperaturkurve für das gewünschte Flussratenprofil des Injektionsmaterials an den Sensorstellen;
Bereitstellen einer physischen Form, die dem Computermodell der Form entspricht, wobei die physische Form physische Sensoren an den Sensorstellen aufweist;
Injizieren des Injektionsmaterials in die physische Form mit einer physischen Flussrate, die dem gewünschten Flussratenprofil entspricht;
Überwachen von Druck, Volumen und Temperatur des Injektionsmaterials durch die physischen Sensoren;
Steuern der physischen Flussrate, wenn der überwachte Druck, das überwachte Volumen oder die überwachte Temperatur des Injektionsmaterials von der Druckkurve, der Volumenkurve und der Temperaturkurve abweicht.

2. Verfahren nach Anspruch 1, wobei der Schritt des Eingebens von Parametern, die sich auf das Objekt beziehen, das Eingeben von mindestens einer von einer Nennwanddicke, einer Objektgeometrie und einer Oberflächenbeschaffenheit einschließt,

wobei der Schritt des Eingebens von Parametern, die sich auf die Form beziehen, das Eingeben von mindestens einem von einem Formmaterial und Kühlannahmen einschließt,
wobei der Schritt des Eingebens von Parametern, die sich auf das Injektionsmaterial beziehen, das Eingeben von mindestens einem von einer Materialart und Materialeigenschaften einschließt, und/oder
wobei der Schritt des Eingebens von Parametern, die sich auf die Injektionsmaschine beziehen, das Eingeben von mindestens einem von einem Druckbereich und einem Temperaturbereich einschließt.

3. Verfahren nach Anspruch 1, wobei der Schritt des Identifizierens von Sensorstellen das Identifizieren einer ersten Stelle an einer Düse und einer zweiten Stelle an einem Ende einer Füllstelle einschließt.

4. Verfahren nach Anspruch 1, wobei der Schritt des Erzeugens von Druck-, Volumen- und Temperaturkurven ein Lesen der Druck-, Volumen- und Temperaturkurven zu einer Laufzeit und ein Anpassen der Druck-, Volumen- und Temperaturkurven einschließt, und/oder
wobei der Schritt des Erzeugens von Druck-, Volumen- und Temperaturkurven ein Durchführen von Finite-Elemente-Analyse-Berechnungen und das Erzeugen von vorberechneten Kurven einschließt, vorzugsweise ferner umfassend das Lesen von Informationen von den physischen Sensoren und ein Verwenden der vorberechneten Kurven, um ein Vorwärtskopplungsprofil zum Steuern einer Schmelze durch Druck, Schneckengeschwindigkeit oder ein Kombinationsprofil zu bestimmen.

5. Verfahren nach Anspruch 1, wobei die Druck-, Volumen- und Temperaturkurven durch Durchführen von Finite-Elemente-Analyse(FEA)-Berechnungen erzeugt werden,
wobei die FEA-Berechnungen vorzugsweise an einem FEA-Modell einer Form durchgeführt werden, wobei das FEA-Modell der Form vorzugsweise virtuelle Sensoren an Stellen einschließt, die den Sensorstellen der physischen Form entsprechen.

6. Verfahren nach Anspruch 1, wobei der Schritt des Steuerns der physischen Flussrate das Anpassen mindestens eines von einem Druck, einer Schneckengeschwindigkeit und einer Temperatur einschließt.

7. System, umfassend:

einen Hohlraum;

eine Injektionsdüse, die konfiguriert ist, um Material in den Hohlraum zu injizieren;

eine Vielzahl von Sensoren an Sensorstellen, wobei jeder der Vielzahl von Sensoren konfiguriert ist, um einen Druck, ein Volumen und eine Temperatur des Materials an einer der Sensorstellen zu erfassen;

eine Steuerung, die konfiguriert ist, um eine Flussrate der Injektion von Material in den Hohlraum zu steuern, und einen Prozessor, der konfiguriert ist, um die Druckkurve, die Volumenkurve und die Temperaturkurve durch Finite-Elemente-Analyse(FEA)-Berechnungen zu erzeugen,

wobei die Steuerung konfiguriert ist, um Informationen von der Vielzahl von Sensoren, die sich auf den Druck, das Volumen und die Temperatur des Materials beziehen, zu empfangen und die empfangenen Informationen mit einer Druckkurve, einer Volumenkurve und einer Temperaturkurve zu vergleichen, und

wobei die Steuerung konfiguriert ist, um die Flussrate zu steuern, wenn der Druck, das Volumen oder die Temperatur des Injektionsmaterials von der Druckkurve, der Volumenkurve und der Temperaturkurve abweicht wobei der Prozessor konfiguriert ist, um die FEA-Berechnungen an einem FEA-Modell einer Form durchzuführen, wobei das FEA-Modell der Form virtuelle Sensoren an Stellen einschließt, die den Sensorstellen entsprechen.

8. System nach Anspruch 7, wobei die Steuerung konfiguriert ist, um mindestens eines von einem Druck, einer Schneckengeschwindigkeit und einer Temperatur zu steuern, und/oder

wobei die Steuerung konfiguriert ist, um eine Materialschmelze durch Druck, Schneckengeschwindigkeit oder ein Kombinationsprofil zu steuern.

## Revendications

1. Procédé de modélisation puis de formation physique d'un objet, le procédé comprenant :

la construction d'un modèle informatique d'un moule pour l'objet, dans lequel l'étape de construction du modèle informatique du moule comporte l'entrée de paramètres liés à l'objet et au moule ;

l'identification des emplacements de capteurs dans le modèle informatique du moule qui correspondent à des emplacements où des capteurs physiques seraient situés dans un moule physique ;

le placement des capteurs virtuels dans le modèle informatique au niveau des emplacements de capteurs ;

l'entrée des paramètres liés à un matériau d'injection et à une machine d'injection ;

la création d'une injection simulée en simulant l'écoulement du matériau d'injection dans le modèle informatique du moule ;

la détermination d'un profil de débit d'écoulement souhaité du matériau d'injection pendant l'injection simulée ;

la création des courbes de pression, de volume et de température pour le profil de débit d'écoulement souhaité du matériau d'injection au niveau des emplacements de capteurs ;

la fourniture d'un moule physique correspondant au modèle informatique du moule, dans lequel le moule physique a des capteurs physiques au niveau des emplacements de capteurs ;

l'injection du matériau d'injection dans le moule physique au niveau d'un débit d'écoulement physique correspondant au profil de débit d'écoulement souhaité ;

la surveillance de la pression, du volume et de la température du matériau d'injection par les capteurs physiques ;

le contrôle du débit d'écoulement physique lorsque la pression, le volume ou la température surveillés du matériau d'injection s'écartent des courbes de pression, de volume et de température.

2. Procédé selon la revendication 1, dans lequel l'étape d'entrée de paramètres liés à l'objet comporte l'entrée d'une parmi une épaisseur de paroi nominale, une géométrie d'objet et une finition de surface,

dans lequel l'étape d'entrée de paramètres liés au moule comporte l'entrée d'un parmi un matériau de moule et des hypothèses de refroidissement,

dans lequel l'étape d'entrée de paramètres liés au matériau d'injection comporte l'entrée d'un parmi un type de matériau et des propriétés de matériau, et/ou

dans lequel l'étape d'entrée de paramètres liés à la machine d'injection comporte l'entrée d'au moins une parmi une plage de pression et une plage de température.

3. Procédé selon la revendication 1, dans lequel l'étape d'identification des emplacements des capteurs comporte l'identification d'un premier emplacement au niveau d'une buse et d'un second emplacement au niveau d'une extrémité d'un emplacement de remplissage.

**4.** Procédé selon la revendication 1, dans lequel l'étape de création de courbes de pression, de volume et de température comporte la lecture des courbes de pression, de volume et de température au moment de l'exécution et le réglage des courbes de pression, de volume et de température, et/ou
dans lequel l'étape de création de courbes de pression, de volume et de température comporte la réalisation de calculs d'analyse par éléments finis et la création de courbes précalculées, comprenant de préférence en outre la lecture d'informations à partir des capteurs physiques et l'utilisation des courbes précalculées pour déterminer un profil d'anticipation pour le contrôle de la fusion par la pression, la vitesse de vis ou un profil combiné.

**5.** Procédé selon la revendication 1, dans lequel les courbes de pression, de volume et de température sont créées en réalisant des calculs d'analyse par éléments finis (FEA),
dans lequel les calculs FEA sont de préférence réalisés sur un modèle FEA d'un moule, dans lequel le modèle FEA du moule comporte de préférence des capteurs virtuels au niveau d'emplacements correspondant aux emplacements de capteurs du moule physique.

**6.** Procédé selon la revendication 1, dans lequel l'étape de contrôle du débit d'écoulement physique comporte le réglage d'au moins une pression, une vitesse de vis et une température.

**7.** Système, comprenant :

une cavité ;
une buse d'injection conçue pour injecter un matériau dans la cavité ;
une pluralité de capteurs au niveau des emplacements de capteur, dans lequel chacun de la pluralité de capteurs étant configuré pour détecter une pression, un volume et une température du matériau au niveau d'un des emplacements de capteurs ;
un contrôleur configuré pour contrôler un débit d'écoulememt d'injection de matériau dans la cavité, et
un processeur configuré pour créer les courbes de pression, de volume et de température par des calculs d'analyse par éléments finis (FEA),

dans lequel le contrôleur est configuré pour recevoir des informations à partir de la pluralité de capteurs concernant la pression, le volume et la température du matériau et comparer les informations reçues aux courbes de pression, de volume et de température, et
dans lequel le contrôleur est configuré pour contrôler le débit d'écoulement lorsque la pression, le volume ou la température du matériau d'injection s'écarte des courbes de pression, de volume et de température
dans lequel le processeur est configuré pour réaliser les calculs FEA sur un modèle FEA d'un moule, dans lequel le modèle FEA du moule comporte des capteurs virtuels au niveau d'emplacements correspondant aux emplacements de capteurs.

**8.** Système selon la revendication 7, dans lequel le contrôleur est configuré pour contrôler au moins une parmi une pression, une vitesse de vis et une température,
dans lequel le contrôleur est configuré pour contrôler la fusion du matériau par la pression, la vitesse de vis ou un profil combiné.

Fig. 1

Fig. 2

Fig. 3

410 — GENERATE OR PROVIDE COMPUTATIONAL MODEL

400

420 — DISCRETIZE MODEL SOLUTION DOMAIN

430 — SPECIFY BOUNDARY CONDITIONS

480

440 — CALCULATE/SOLVE RELEVANT FILLING PHASE PROCESS VARIABLES

MODIFY BOUNDARY CONDITIONS OR DISCRETIZATION

450 — CALCULATE/SOLVE RELEVANT PACKING PHASE PROCESS VARIABLES

460 — OUPUT RESULTS

470 — ACCEPTABLE ?

NO

YES

490 — END

Fig. 4

500

510 — Provide Injection Molding Device and Mold Having Plurality of Sensors

520 — Provide PVT Curves

530 — Inject Material Into Mold

540 — Sensed PVT Matches PVT Curves?

No → 550 — Adjust Flow Rate

Yes

560 — Continue to Inject Material Into Mold

570 — Cavity Filled?

No

Yes

580 — End

Fig. 5

**EP 3 421 219 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170015040 A1
- US 20130255371 A1
- US 20040047935 A1

**Non-patent literature cited in the description**

- **BRYAN A. GAMER.** A Dictionary of Modern Legal Usage. 1995, vol. 624